## Europäisches Patentamt

## European Patent Office

## Office européen des brevets

(19)

(11) Veröffentlichungsnummer: **0 108 192**
A2

(12) # EUROPÄISCHE PATENTANMELDUNG

(21) Anmeldenummer: 83106157.7

(51) Int. Cl.³: **B 29 F 1/00**

(22) Anmeldetag: 23.06.83

(30) Priorität: 08.10.82 DE 3237298

(43) Veröffentlichungstag der Anmeldung:
16.05.84 Patentblatt 84/20

(84) Benannte Vertragsstaaten:
AT BE CH DE FR GB IT LI NL SE

(71) Anmelder: Frömag Fröndenberger Maschinen- und
Apparatebau Gesellschaft mbH
Am Klingelbach 2
D-5758 Fröndenberg(DE)

(72) Erfinder: Roos, Rüdiger, Dipl.-Ing.
Bergpfad 6
D-4750 Unna(DE)

(72) Erfinder: Runtemund, Friedhelm
Ahornweg 25
D-5758 Fröndenberg(DE)

(74) Vertreter: Patentanwälte Meinke und Dabringhaus
Dipl.-Ing. J. Meinke Dipl.-Ing. W. Dabringhaus
Westenhellweg 67
D-4600 Dortmund 1(DE)

(54) **Vorrichtung zum Entfernen von gespritzten Kunststoffteilen mit Gewinden aus dem Werkzeug einer Spritzgiessmaschine.**

(57) Bei einer Vorrichtung (1) zum Entfernen von gespritzten Kunststoffteilen mit Gewinden aus dem Werkzeug einer Spritzgießmaschine, insbesondere einer Spritzgießmaschine mit einer Mehrzahl von im Arbeitstakt revolverartig umlaufenden Werkzeugträgern (3), wobei jedes Werkzeug (4,4') eine Mehrzahl von Spritzlingen (2,2') trägt, mit einer Greifeinrichtung (5,5') zur Erfassung der Spritzlinge, zum Drehen dieser Greifeinrichtung und zum gleichzeitigen Verfahren der Greifeinrichtung, entsprechend der Gewindesteigung der Spritzlinggewinde, soll eine Lösung geschaffen werden, mit der sowohl eine Beschädigung der Oberfläche der Spritzlinge (2,2') vermieden und gleichzeitig eine Leistungssteigerung der Vorrichtung erreicht wird, unabhängig davon, ob die Spritzlinge ein Außen- (2') oder ein Innengewinde (2) aufweisen. Dies wird dadurch erreicht, daß die Greifeinrichtung von einer mittels eines Druckmittels auf Bereiche der Spritzlinge (2) aufpreßbaren Membran (5) aus elastischem Werkstoff, insbesondere aus Gummi, gebilet ist.

EP 0 108 192 A2

*0108192*

FIG.1

"Vorrichtung zum Entfernen von gespritzten Kunststoffteilen mit Gewinden aus dem Werkzeug einer Spritzgießmaschine"

Die Erfindung richtet sich auf eine Vorrichtung zum Entfernen von gespritzten Kunststoffteilen mit Gewinden aus
dem Werkzeug einer Spritzgießmaschine, insbesondere einer Spritzgießmaschine mit einer Mehrzahl von im Arbeitstakt revolverartig umlaufenden Werkzeugträgern, wobei
jedes Werkzeug eine Mehrzahl von Spritzlingen trägt,
mit einer Greifeinrichtung zur Erfassung der Spritzlinge, zum Drehen dieser Greifeinrichtung und zum gleichzeitigen Verfahren der Greifeinrichtung, entsprechend
der Gewindesteigung der Spritzlinggewinde.

Aus der DE-OS 30 47 947 ist eine sogenannte Revolver-
Spritzgießmaschine bekannt, bei der in einer Spritzstation in einem geteilten Werkzeug Spritzlinge mit
einem Innengewinde gespritzt werden, wobei es bekannt
ist, auf einem Werkzeug zwei Spritzlinge herzustellen.
Nach Öffnen der Form wird die die Kerne tragende Werkzeughälfte taktweise revolverartig weitergefördert, wobei die Spritzlinge auf dem Kern verbleiben und an der
Umgebungsluft abkühlen. In einer Ausdreheinheit werden
die Spritzlinge vom Kern abgeschraubt, und zwar dadurch,
daß Konturenschalen außen satt über die Spritzlinge geschoben werden, die dann gedreht werden, wobei die Konturenschalen gleichzeitig entsprechend der Steigung des
Gewindes der Spritzlinge zurückverfahren werden. Beim
weiteren Zurückverfahren stoßen Auswerfbolzen gegen die

ORIGINAL

0108192

Spritzlinge und stoßen diese aus der Konturenschale heraus.

Durch die Anmelderin ist eine weitere Vorrichtung bekannt geworden, bei der die Kerne teilweise zurückgeschraubt werden, um dann ein Auswerfen der Spritzlinge zu ermöglichen. Diese Vorrichtung arbeitet ebenfalls nach dem Revolverprinzip.

Die bekannten Einrichtungen haben den Nachteil, daß sie nur eine geringe Leistung haben und bei noch warmen Spritzlingen bei der gattungsgemäßen Vorrichtung die Gefahr besteht, daß bei Aufschieben der Konturenschalen die Außenoberfläche der Spritzlinge beschädigt werden kann. Auch sind die bekannten Vorrichtungen vergleichsweise aufwendig, da für unterschiedliche Spritzlinge unterschiedliche Ausdrehwerkzeuge gefertigt werden müssen.

Aufgabe der Erfindung ist daher die Schaffung einer Lösung, mit der sowohl eine Beschädigung der Oberfläche der Spritzlinge vermieden und gleichzeitig eine Leistungssteigerung der Vorrichtung erreicht wird, unabhängig davon, ob die Spritzlinge ein Außen- oder ein Innengewinde aufweisen.

Mit einer Vorrichtung der eingangs bezeichneten Art wird diese Aufgabe gemäß der Erfindung dadurch gelöst, daß die Greifeinrichtung von einer mittels eines Druckmittels auf Bereiche der Spritzlinge aufpreßbaren Membran

0108192

aus elastischem Werkstoff, insbesondere aus Gummi, gebildet ist.

Durch die erfindungsgemäße Gestaltung der Greifeinrichtung wird ein besonders schonender gleichzeitig aber auch ein besonders fester Andruck auf die zu ergreifenden Flächen der Spritzlinge möglich gemacht. Durch den möglichen Verformungsweg der Membran können breite Größenvarianten von Spritzlingen in den zu ergreifenden Konturen abgeschraubt werden, ohne daß es dazu einer Änderung des Werkzeuges bedürfte.

In Ausgestaltung sieht die Erfindung vor, daß die druckmittelverformbare Membran im wesentlichen als an Bereichen der Vorrichtung außenrandseitig eingespannte und im wesentlichen topfförmige Membran ausgebildet ist.

Diese Gestaltung ist fertigungstechnisch vergleichsweise einfach. Allerdings ist die Erfindung nicht auf die Gestaltung der Membran in Topfform beschränkt. Dies kann beispielsweise auch ein randseitig auf beiden Seiten eingespannter Ring sein u. dgl. mehr.

Nach der Erfindung kann auch vorgesehen sein, daß zur Anpassung an unterschiedliche Formen und Größen der Spritzlinge in die topfförmige Membran oder über die topfförmige Membran ein Distanz- bzw. Verschleißring aus ebenfalls elastischem Material ein- bzw. aufgeschoben ist.

Durch diese Gestaltung wird zum einen erreicht, daß mit einer Grundausstattung des Werkzeuges ein noch größerer Bereich von Spritzlingsabmessungen überdeckt werden kann als dies ohnehin durch die elastische Verformbarkeit der Membran gegeben ist, wie dies weiter oben bereits beschrieben wurde. Gleichzeitig hat diese Gestaltung den Vorteil, daß der eingespannte elastische Körper, d.h. die Membran, in der Regel nicht den noch vergleichsweise hohen Temperaturen der Spritzlinge ausgesetzt ist, die diese noch in der Abschraubvorrichtung aufweisen können, d.h. die Erfindung kann auch bei Vorrichtungen eingesetzt werden, bei denen das Abschrauben vergleichsweise kurz nach dem Spritzvorgang erfolgt, was zu einer Leistungssteigerung entsprechender Maschinen führt.

Für eine Vorrichtung zum Ergreifen der Außenoberfläche eines Spritzlinges mit Innengewinde sieht die Erfindung in weiterer Ausgestaltung vor, daß die topfförmige Membran in einer Sackbohrung der Vorrichtung angeordnet und neben der randseitigen Einspannung auch gegen Elemente an der Stirnwand der Sackbohrung verspannt ist, wobei insbesondere vorgesehen sein kann, daß der Boden der Sackbohrung, die Verspannelemente in diesem Bereich und die Membran mit einer zentralen Ausnehmung für einen Auswerfstößel ausgerüstet sind.

Grundsätzlich ist aus dem gattungsgemäßen Stand der Technik eine Abschraubvorrichtung bekannt, bei der gleichzeitig zwei gespritzte Gewindekappen o. dgl. von den Kernen abgeschraubt werden. Zur Leistungssteigerung sieht die Erfindung in Ausgestaltung vor, daß wenigstens vier Ausdrehwerkzeuge an einem gemeinsamen Träger angeordnet und über ein gemeinsames Getriebe angetrieben sind. Hierzu ist nach der Erfindung in weiterer Ausgestaltung auch vorgesehen, daß der Antrieb der die Membran zum Greifen tragenden Vorrichtungselemente über einen Hydraulikmotor erfolgt und/oder die axiale Verstellung der die Membranen tragenden Vorrichtungselemente entsprechend der Gewindesteigungen der Spritzlinge hydraulisch erfolgt. Weitere Merkmale, Einzelheiten und Vorteile der Erfindung ergeben sich aufgrund der nachfolgenden Beschreibung sowie anhand der Zeichnung. Diese zeigt in

Fig. 1 eine schematische Ansicht der Vorrichtung mit einer Abschraubeinrichtung für ein Innengewinde in der oberen Figurenhälfte und einer Abschraubeinrichtung für ein Außengewinde in der unteren Figurenhälfte,

Fig. 2 einige Membranformen in schematischer Darstellung.

Die allgemein mit 1 bezeichnete Vorrichtung zum Entfernen von gespritzten Kunststoffteilen 2 bzw. 2' besteht aus einem Werkzeugträger 3 der eine Mehrzahl von Abschraubwerkzeugen 4 bzw. 4' aufweist.

BAD ORIGINAL

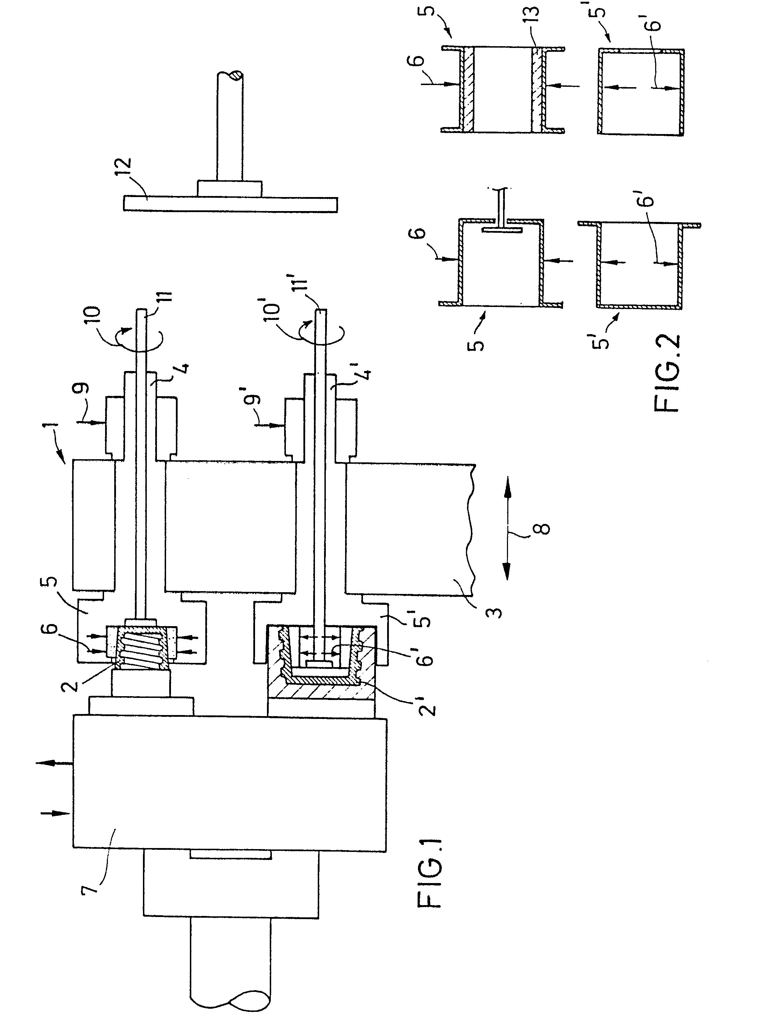

In der Fig. 1 ist das gespritzte Kunststoffteil mit Innengewinde mit 2 bezeichnet, dasjenige mit Außengewinde mit 2' und die entsprechenden Vorrichtungselemente, die diesen beiden Teilen zugeordnet sind, jeweils mit einem Bezugszeichen ohne Strich bzw. mit Strich.

Jedes Werkzeug 4 bzw. 4' ist mit einer Greifeinrichtung 5 bzw. 5' ausgerüstet, bei der es sich um eine Membran aus einem elastischen Werkstoff, z.B. aus Gummi, handelt. Unter dem Ausdruck Membran soll sowohl ein verformbarer zylinderförmiger Körper verstanden werden, wie ebenfalls ein topfförmig ausgebildetes Element. Einige mögliche Formen der Membran nach der Erfindung sind in Fig. 2 dargestellt.

Durch die Pfeile 6 bzw. 6' in den Fig. ist angedeutet, daß die Membran 5 von einem Druckmittel in Richtung auf die zu ergreifenden Spritzlinge gepreßt werden kann. In der Fig. 2 oben rechts ist dargestellt, daß die Membran 5 in ihrer Innenausnehmung oder ihrem Außenumfang mit einem weiteren Distanz- bzw. Verschleißring 13 versehen werden kann, um sich unterschiedlichen zu ergreifenden Durchmessern anpassen zu können und ggf. um hohen Temperaturen der Spritzlinge standhalten zu können, was mittels entsprechender Materialgemische erreichbar ist.

Die Wirkungsweise der Vorrichtung ist die folgende :

0108192

Eine eine Mehrzahl von Spritzlingen 2 bzw. 2' tragende Formhälfte 7 einer Spritzgießmaschine wird z.B. in Art eines Revolvers der Vorrichtung 1 zugeführt. Die Werkzeuge der Vorrichtung 1 werden mit dem Werkzeugträger 3 in Richtung des Doppelpfeiles 8 nach links auf die Werkzeughälfte 7 zubewegt. Die Membranen 5 sind nicht mit einem Druckmittel beaufschlagt. Nach Auffahren auf die abzuschraubenden Spritzlinge 2 werden die Membranen 5 bzw. 5' mit einem Druckmittel, z.B. Druckluft, beaufschlagt, was durch die Pfeile 9 bzw. 9' angedeutet ist. Bei der Beaufschlagung durch das Druckmittel werden die Membranen in Richtung der Pfeile 6 bzw. 6' zusammengepreßt bzw. aufgedehnt und ergreifen so die entsprechende Oberfläche der Spritzlinge. Durch Einleiten der Schraubbewegung über ein nicht näher dargestelltes, gemeinsames Getriebe aller Werkzeuge 4 etwa in Richtung des Pfeiles 10 (in der Fig. 1 obere Figurenhälfte) und gleichzeitigem Rückhub des Werkzeugträgers in Richtung des Doppelpfeiles 8 nach rechts, werden die Formlinge 2 bzw. 2' von der vorderen Hälfte 7 abgeschraubt.

Im oberen Figurenbeispiel ist noch gezeigt, daß im Fall eines Innengewindes ein Auswerfstößel 11 vorgesehen sein kann, der bei Rückhub nach rechts in Richtung des Doppelpfeiles 8 auf einer Anschlagplatte 12 auffahren kann und dabei den Spritzling ausstößt.

0108192

Natürlich sind die beschriebenen Ausführungsbeispiele der Erfindung noch in vielfacher Hinsicht abzuändern, ohne den Grundgedanken der Erfindung zu verlassen. So ist die Erfindung insbesondere nicht auf die dargestellte Membrangestaltung und die Anordnung der Werkzeuge im Werkzeugträger beschränkt. Vielmehr gilt die Figur nur als vereinfacht wiedergegebene schematische Zeichnung.

0108192

Patentansprüche :

1. Vorrichtung zum Entfernen von gespritzten Kunststoffteilen mit Gewinden aus dem Werkzeug einer Spritzgießmaschine, insbesondere einer Spritzgießmaschine mit einer Mehrzahl von im Arbeitstakt revolverartig umlaufenden Werkzeugträgern, wobei jedes Werkzeug eine Mehrzahl von Spritzlingen trägt, mit einer Greifeinrichtung zur Erfassung der Spritzlinge, zum Drehen dieser Greifeinrichtung und zum gleichzeitigen Verfahren der Greifeinrichtung, entsprechend der Gewindesteigung der Spritzlinggewinde,
dadurch gekennzeichnet,
daß die Greifeinrichtung von einer mittels eines Druckmittels auf Bereiche der Spritzlinge (2) aufpreßbaren Membran (5) aus elastischem Werkstoff, insbesondere aus Gummi, gebildet ist.

2. Vorrichtung nach Anspruch 1,
dadurch gekennzeichnet,
daß die druckmittelverformbare Membran (5) im wesentlichen als an Bereichen der Vorrichtung (1) außenrandseitig eingespannte und im wesentlichen topfförmige Membran ausgebildet ist.

3. Vorrichtung nach Anspruch 1 oder 2,
dadurch gekennzeichnet,
daß zur Anpassung an unterschiedliche Formen und Größen der Spritzlinge (2) in die topfförmige Membran (5) oder über die topfförmige Membran (5') ein Distanz- bzw.
Verschleißring (13) aus ebenfalls elastischem Material ein- bzw. aufgeschoben ist.

4. Vorrichtung nach Anspruch 1 oder einem der folgenden
zum Ergreifen der Außenoberfläche eines Spritzlinges
mit Innengewinde,
dadurch gekennzeichnet,
daß die topfförmige Membran (5) in einer Sackbohrung
der Vorrichtung (1) angeordnet und neben der randseitigen Einspannung auch gegen Elemente an der Stirnwand
der Sackbohrung verspannt ist.

5. Vorrichtung nach Anspruch 4,
dadurch gekennzeichnet,
daß der Boden der Sackbohrung, die Verspannelemente in
diesem Bereich und die Membran (5) mit einer zentralen
Ausnehmung für einen Auswerfstößel (11) ausgerüstet sind.

6. Vorrichtung nach Anspruch 1 oder einem der folgenden,
dadurch gekennzeichnet,
daß wenigstens vier Ausdrehwerkzeuge (4) an einem gemeinsamen Träger (3) angeordnet und über ein gemeinsames
Getriebe angetrieben sind.

7. Vorrichtung nach einem der vorangehenden Ansprüche,
dadurch gekennzeichnet,

0108192

daß der Antrieb der die Membran (5) zum Greifen tragenden Vorrichtungselemente (4) über einen Hydraulikmotor erfolgt.

8. Vorrichtung nach einem der vorangehenden Ansprüche, dadurch gekennzeichnet, daß die axiale Verstellung (Pfeil 8) der die Membranen (5) tragenden Vorrichtungselemente (3) entsprechend der Gewindesteigungen der Spritzlinge (2) hydraulisch erfolgt.

FIG.1

FIG.2